# EUROPEAN PATENT APPLICATION

(11) **EP 4 383 548 A1**
(43) Date of publication of application: **12.06.2024**
(21) Application number: 21952520.1
(22) Date of filing: 13.09.2021
(51) Int. Cl.: H02M 7/219

(54) **CURRENT SOURCE-TYPE CONTROLLABLE DIRECT-CURRENT CURRENT SOURCE ICE-MELTING CIRCUIT AND APPARATUS**

(30) Priority: 02.08.2021 CN 202110882875
(71) Applicant: Electric Power Research Institute. China Southern Power Grid, Guangzhou, Guangdong 510663 (CN); China Southern Power Grid, Guangzhou, Guangdong 510663 (CN)
(72) Inventor: FU, Chuang, Guangzhou, Guangdong 510663 (CN); ZHOU, Yuebin, Guangzhou, Guangdong 510663 (CN); XU, Shukai, Guangzhou, Guangdong 510663 (CN); ZENG, Huarong, Guangzhou, Guangdong 510663 (CN); MAO, Xianyin, Guangzhou, Guangdong 510663 (CN); MA, Xiaohong, Guangzhou, Guangdong 510663 (CN); SUN, Peng, Guangzhou, Guangdong 510663 (CN)
(74) Representative: von Hirschhausen, Helge
(86) International application number: PCT/CN2021/117921
(87) International publication number: WO 2023/010651

(57) **Abstract**

Disclosed are a current source-type controllable direct-current current source ice-melting circuit and an apparatus. A current source-type flow reversing valve set formed by connecting reverse resistance-type, full control-type power electronic devices in series is used to form a three-phase, six-bridge arm structure circuit, which is connected to a three-phase ice-melting circuit. A knife switch is used for controlling the circuit turning on/off, forming an ice-melting loop. Meanwhile, ice melting by a three-phase circuit (that is, a power transmission wire lead and a ground wire) can be implemented, so that different loops can be formed according to multiple types of knife switch control so as to complete ice-melting tasks of different wires, and the problem of reactive power consumption and the problem of generating characteristic harmonics, which are brought about when operating a controlled-rectification, direct-current ice-melting apparatus having a semi-controllable thyristor, can be avoided. In addition, no capacitor is needed in the three-phase, six-bridge arm structure circuit, thus avoiding the problem that the application scenarios are restricted due to a direct-current ice-melting apparatus having a voltage source-type circuit converter using a full bridge submodule having a large volume and a low power density.

## Description

### FIELD

The present disclosure relates to the technical field of an ice-melting circuit for transmission lines, and in particular to a current source controllable direct-current current source ice-melting circuit and a current source controllable direct-current current source ice-melting apparatus.

### BACKGROUND

Transmission lines covered with ice in winter is one of the major natural disasters for a power system. For the transmission lines severely covered with ice, the mechanical performance and the electrical performance of the transmission lines are sharply reduced, resulting in power supply interruption and even serious accidents such as power grid disconnection. Moreover, the repair process is difficult and time-consuming, resulting in significant impact.

The direct current ice melting method is one of the methods for melting the ice covered on the transmission lines. With the direct current ice melting method, an alternating-current power is converted to a direct-current current by using a power electronic device to heat a certain length of transmission line covered with ice, thereby melting the ice. According to the conventional direct current ice melting method, a direct current ice melting apparatus with controllable rectification using thyristors or a direct current ice melting apparatus using a voltage source converter is adopted. The direct current ice melting apparatus with controllable rectification using thyristors, in operation, consumes reactive power and generates feature harmonics, affecting the connection to an alternating-current system. The direct current ice melting apparatus using a voltage source converter with a full-bridge submodule has a large volume and a low power density, and is easily limited in application scenarios. Therefore, how to overcome the defects of the direct current ice melting apparatus with controllable rectification using thyristors and the direct current ice melting apparatus using a voltage source converter is a technical problem urgently solved by those skilled in the art.

### SUMMARY

A current source controllable direct-current current source ice-melting circuit and a current source controllable direct-current current source ice-melting apparatus are provided according to the present disclosure, to solve the technical problem that the direct current ice melting apparatus with controllable rectification using thyristors, in operation, consumes reactive power, generates feature harmonics and affects the connection to an alternating-current system and the technical problem that the direct current ice melting apparatus using a voltage source converter with a full-bridge submodule has a large volume and a low power density and is easily limited in application scenarios.

In view of this, a current source controllable direct-current current source ice-melting circuit is provided in a first aspect of the present disclosure. The circuit includes: a three-phase six-bridge arm structure circuit, a three-phase ice-melting circuit, and a LC filtering circuit. The three-phase six-bridge structure circuit includes following six bridge arms: a first current source converter valve group, a second current source converter valve group, a third current source converter valve group, a fourth current source converter valve group, a fifth current source converter valve group and a sixth current source converter valve group. Each of the first current source converter valve group, the second current source converter valve group, the third current source converter valve group, the fourth current source converter valve group, the fifth current source converter valve group and the sixth current source converter valve group includes reverse-resistance and fully-controlled power electronic devices connected in series. An input terminal of the three-phase six-bridge arm structure circuit is connected to an input phase of an alternating-current power supply and the LC filtering circuit, and an output terminal of the three-phase six-bridge arm structure circuit is connected to the three-phase ice-melting circuit through isolation switches. The isolation switches include a first isolation switch, a second isolation switch, a third isolation switch and a fourth isolation switch. A terminal of the first isolation switch is connected to a positive pole of an output terminal of the three-phase six-bridge arm structure circuit, and another terminal of the first isolation switch is connected to a first phase ice-melting circuit. A terminal of the second isolation switch is connected to the positive pole of the output terminal of the three-phase six-bridge arm structure circuit, and another terminal of the second isolation switch is connected to a second phase ice-melting circuit. A terminal of the third isolation switch is connected to a negative pole of the output terminal of the three-phase six-bridge arm structure circuit, and another terminal of the third isolation switch is connected to the second phase ice-melting circuit. A terminal of the fourth isolation switch is connected to the negative pole of the output terminal of the three-phase six-bridge arm structure circuit, and another terminal of the fourth isolation switch is connected to a third phase ice-melting circuit.

In an embodiment, the reverse-resistance and fully-controlled power electronic devices are reverse-resistance IGBTs or IGBT series diodes.

In an embodiment, the reverse-resistance and fully-controlled power electronic devices are reverse-resistance IGCTs or IGCT series diodes.

In an embodiment, the input phase of the alternating-current power supply includes a 35kV bus or a 10kV bus, a circuit breaker, a power supply-side isolation switch and a transformer that are connected in sequence.

In an embodiment, each of the first phase ice-melting circuit, the second phase ice-melting circuit and the third phase ice-melting circuit of the three-phase ice-melting circuit includes a bus, an ice-melting isolation switch and a to-be-melted line that are connected in sequence. A terminal of a to-be-melted line in the first phase ice-melting circuit is connected to a terminal of a to-be-melted line in the second phase ice-melting circuit through a first circuit isolation switch, and the terminal of the to-be-melted line in the second phase ice-melting circuit is connected to a terminal of a to-be-melted line in the third phase ice-melting circuit through a second circuit isolation switch.

In an embodiment, an input terminal of the to-be-melted line in the first phase ice-melting circuit is connected to an overhead ground wire or an optical fiber composite ground wire through a first branch isolation switch, and a terminal of the overhead ground wire or a terminal of the optical fiber composite ground wire is connected to an input terminal of the to-be-melted line in the third phase ice-melting circuit through a second branch isolation switch.

A current source controllable direct-current current source ice-melting apparatus is provided in a second aspect of the present disclosure. The current source controllable direct-current current source ice-melting apparatus includes the current source controllable direct-current current source ice-melting circuit in the first aspect.

Based on the above technical solutions, it can be seen that the embodiments of the present disclosure have the following advantages.

A current source controllable direct-current current source ice-melting circuit is provided according to the present disclosure. In the circuit, the three-phase six-bridge arm structure circuit includes current source converter valve groups each of which including reverse-resistance and fully-controlled power electronic devices connected in series, and the three-phase six-bridge arm structure circuit is connected to the three-phase ice-melting circuit. Switches are used for turning on or turning off a circuit, and an ice-melting circuit is formed, thereby performing ice-melting processing on three-phase wires (that is, transmission lines and ground lines). Different switches are controlled to form different circuit to perform ice-melting processing on different lines, so that the technical problem that the semi-controllable direct current ice melting apparatus with controllable rectification using thyristors, in operation, consumes reactive power and generates feature harmonics can be avoided. In addition, no capacitor is used in the three-phase six-bridge structure circuit, so that the technical problem that the direct current ice melting apparatus using a voltage source converter with a full-bridge submodule has a large volume and is easily limited in application scenarios can be avoided. Therefore, with the present disclosure, the technical problem that the direct current ice melting apparatus with controllable rectification using thyristors, in operation, consumes reactive power, generates feature harmonics and affects the connection to an alternating-current system and the technical problem that the direct current ice melting apparatus using a voltage source converter with a full-bridge submodule has a large volume and a low power density and is easily limited in application scenarios can be solved.

### BRIEF DESCRIPTION OF THE DRAWINGS

In order to clearly illustrate the technical solutions in the embodiments of the present disclosure or in the conventional technology, the drawings to be used in the description of the embodiments or the conventional technology are briefly described below. It is apparent that the drawings in the following description show only some embodiments of the present disclosure, and other drawings may be obtained by those skilled in the art from the drawings without any creative work.
Figure 1 is a schematic structural diagram of a current source controllable direct-current current source ice-melting circuit according to an embodiment of the present disclosure;
Figure 2 is a schematic diagram of an ice-melting circuit with two phase wires connected in series according to an embodiment of the present disclosure;
Figure 3 is a schematic diagram of an ice-melting circuit with two phase wires connected in parallel and then connected with a third phase wire in series according to an embodiment of the present disclosure;
Figure 4 is a schematic diagram of a circuit for performing ice-melting processing on an overhead ground wire or an optical fiber composite ground wire (OPGW) according to an embodiment of the present disclosure;
Figure 5 is a schematic structural diagram of a current source static synchronous compensation device according to an embodiment of the present disclosure;
Figure 6 is an equivalent circuit diagram of the current source static synchronous compensation device shown in Figure 5;
Figure 7 is a schematic diagram of an IGBT series diode according to an embodiment of the present disclosure;
Figure 8 is a schematic diagram of a reverse-resistance IGBT according to an embodiment of the present disclosure;
Figure 9 is a schematic diagram of a reverse-resistance IGCT according to an embodiment of the present disclosure; and
Figure 10 is a schematic diagram of an IGCT series diode according to an embodiment of the present disclosure.

### DETAILED DESCRIPTION

In order to enable those skilled in the art to understand the solutions according to the present disclosure, the technical solutions in the embodiments of the present disclosure are described clearly and completely hereinafter with reference to the drawings in the embodiments of the present disclosure. It is apparent that the embodiments described are only some rather than all the embodiments of the present disclosure. Any other embodiments obtained by those skilled in the art based on the embodiments in the present disclosure without any creative work fall in the scope of protection of the present disclosure.

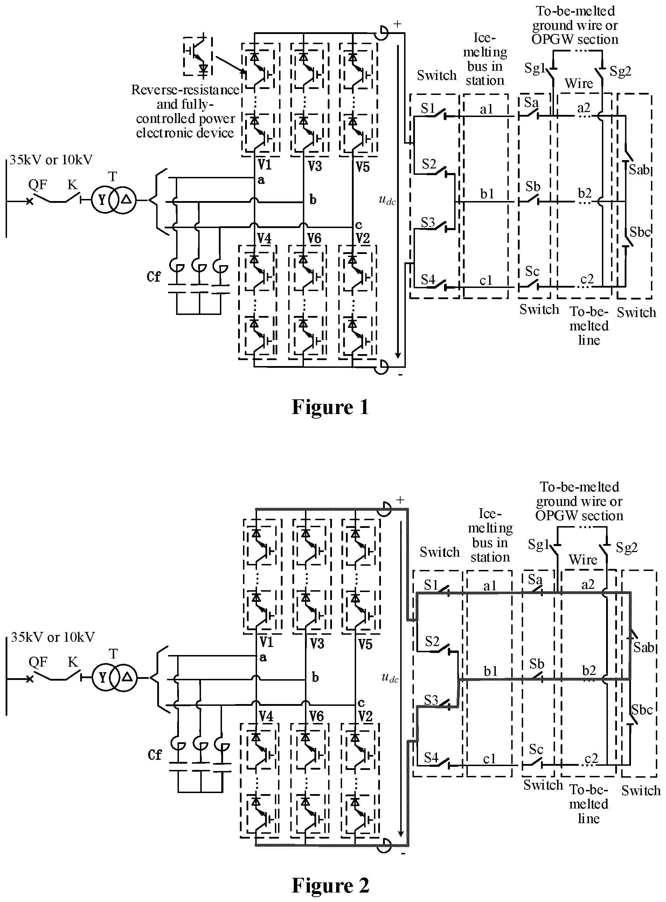

For understanding, reference is made to Figure 1. A current source controllable direct-current current source ice-melting circuit is provided according to an embodiment of the present disclosure. The circuit includes: a three-phase six-bridge arm structure circuit, a three-phase ice-melting circuit, and an LC filtering circuit.

The three-phase six-bridge structure circuit includes the following six bridge arms: a first current source converter valve group V1, a second current source converter valve group V2, a third current source converter valve group V3, a fourth current source converter valve group V4, a fifth current source converter valve group V5 and a sixth current source converter valve group V6. Each of the first current source converter valve group V1, the second current source converter valve group V2, the third current source converter valve group V3, the fourth current source converter valve group V4, the fifth current source converter valve group V5 and the sixth current source converter valve group V6 includes reverse-resistance and fully-controlled power electronic devices connected in series.

An input terminal of the three-phase six-bridge arm structure circuit is connected to an input phase of an alternating-current power supply and the LC filtering circuit Cf, and an output terminal of the three-phase six-bridge arm structure circuit is connected to the three-phase ice-melting circuit through isolation switches. The isolation switches include a first isolation switch S1, a second isolation switch S2, a third isolation switch S3 and a fourth isolation switch S4. A terminal of the first isolation switch S1 is connected to a positive pole of an output terminal of the three-phase six-bridge arm structure circuit, and another terminal of the first isolation switch S1 is connected to a first phase ice-melting circuit. A terminal of the second isolation switch S2 is connected to the positive pole of the output terminal of the three-phase six-bridge arm structure circuit, and another terminal of the second isolation switch S2 is connected to a second phase ice-melting circuit. A terminal of the third isolation switch S3 is connected to a negative pole of the output terminal of the three-phase six-bridge arm structure circuit, and another terminal of the third isolation switch S3 is connected to the second phase ice-melting circuit. A terminal of the fourth isolation switch S4 is connected to the negative pole of the output terminal of the three-phase six-bridge arm structure circuit, and another terminal of the fourth isolation switch S4 is connected to a third phase ice-melting circuit.

As shown in Figure1, in an embodiment of the present disclosure, in the current source controllable direct-current current source ice-melting circuit, the input phase of the alternating-current power supply includes a 35kV bus or a 10kV bus, a circuit breaker QF, a power supply-side isolation switch K and a transformer T that are connected in sequence. Three phases (a, b, and c) of the transformer T serve as the input terminal of the three-phase six-bridge arm structure circuit, and are connected to the LC filter Cf. The LC filter Cf includes a reactor and a capacitor. The positive pole of the terminal u_{dc} of the three-phase six-bridge arm structure circuit is connected to the first isolation switch S 1 and the second isolation switch S2, and the negative pole of the terminal u_{dc} of the three-phase six-bridge arm structure circuit is connected to the third isolation switch S3 and the fourth isolation switch S4. The three-phase six-bridge arm structure circuit is connected to the three-phase ice-melting circuit through the isolation switches S 1 to S4.

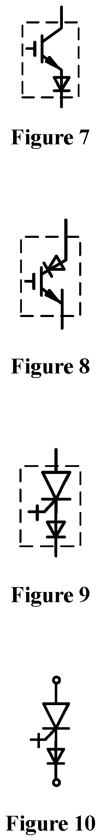

In an embodiment, the reverse-resistance and fully-controlled power electronic devices may be reverse-resistance IGBTs or IGBT series diodes, and the circuit structures of the reverse-resistance IGBTs and the IGBT series diodes are shown in Figure 7 and Figure 8. Alternatively, the reverse-resistance and fully-controlled power electronic devices may be reverse-resistance IGCTs or IGCT series diodes, and the circuit structures of the reverse-resistance IGCTs and the IGCT series diodes are shown in Figure 9 and Figure 10.

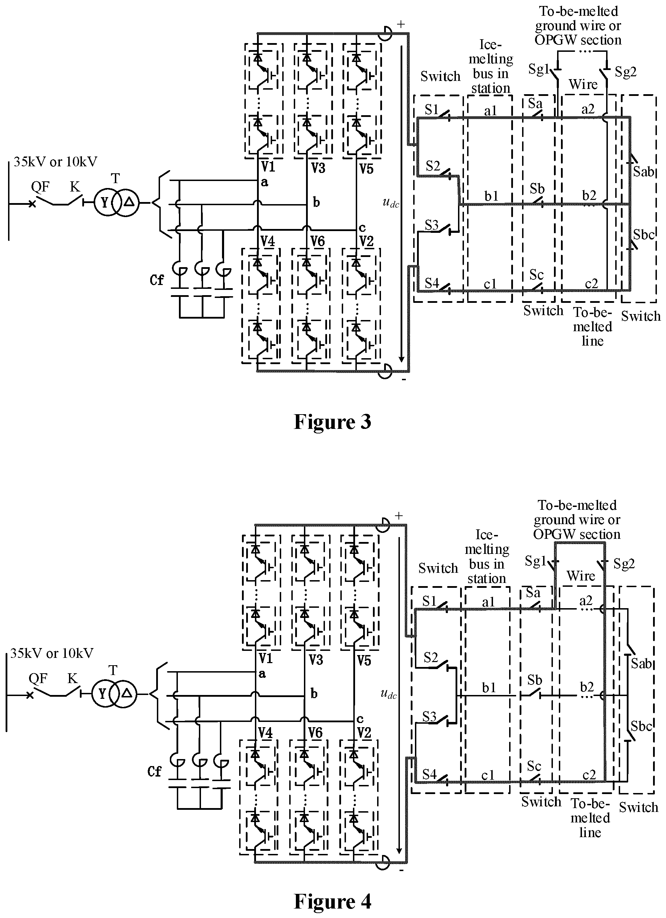

In the three-phase ice-melting circuit, the first phase ice-melting circuit includes a bus (a1), an ice-melting isolation switch (Sa) and a to-be-melted line (a2) that are connected in sequence, the second phase ice-melting circuit includes a bus (b1), an ice-melting isolation switch (Sb) and a to-be-melted line (b2) that are connected in sequence, and the third phase ice-melting circuit includes a bus (c1), an ice-melting isolation switch (Sc) and a to-be-melted line (c2) that are connected in sequence. A terminal of a to-be-melted line in the first phase ice-melting circuit is connected to a terminal of a to-be-melted line in the second phase ice-melting circuit through a first circuit isolation switch Sab, and the terminal of the to-be-melted line in the second phase ice-melting circuit is connected to a terminal of a to-be-melted line in the third phase ice-melting circuit through a second circuit isolation switch Sbc. As shown in Figure 2 and Figure 3, ice-melting processing is performed on the three-phase wires. Figure 2 is a schematic diagram of an ice-melting circuit with two wires connected in series. Figure 3 is a schematic diagram of an ice-melting circuit with two wires connected in parallel and then connected with a third phase wire in series. In Figure 2, the first isolation switch S1 is turned on, the first ice-melting isolation switch Sa is turned on, the first circuit isolation switch Sab is turned on, the second ice-melting isolation switch Sb is turned on, the third isolation switch S3 is turned on, and all the other isolation switches are turned off. Thus, an ice-melting circuit with two phase wires connected in series is formed, and ice-melting processing is performed on the two phase wires. In Figure 3, the first isolation switch S 1, the second isolation switch S2, the first ice-melting isolation switch Sa, the first circuit isolation switch Sab, the second circuit isolation switch Sbc, the second ice-melting isolation switch Sb, the third ice-melting isolation switch Sc and the fourth isolation switch S4 are turned on, and all the other isolation switches are turned off. Thus, an ice-melting circuit with three phase wires is formed, and ice-melting processing is performed on the three phase wires. Therefore, the isolation switches are controlled to be turned on or turned off, so that the ice-melting processing may be performed on wires in one phase or on wires in two phases or on wires in three phase wires, thereby achieving high flexibility and applying to various scenarios

An input terminal of the to-be-melted line a2 in the first phase ice-melting circuit is connected to an overhead ground wire or an optical fiber composite ground wire (OPGW) through a first branch isolation switch Sg1, and a terminal of the overhead ground wire or a terminal of the optical fiber composite ground wire is connected to an input terminal of the to-be-melted line in the third phase ice-melting circuit through a second branch isolation switch Sg2. Figure 4 shows a schematic diagram of a circuit for performing ice-melting processing on an overhead ground wire or an optical fiber composite ground wire. In Figure 4, the first isolation switch S1 is turned on, the first ice-melting isolation switch Sa is turned on, the first circuit isolation switch Sab is turned on, the second circuit isolation switch Sbc is turned on, the third ice-melting isolation switch Sc is turned on, the fourth isolation switch S4 is turned on, and all the other isolation switches are turned off. Thus, an ice-melting circuit for the overhead ground wire or the optical fiber composite ground wire is formed, and the ice-melting processing is performed on the overhead ground wire or the optical fiber composite ground wire. Therefore, according to the present disclosure, the isolation switches are controlled to be turned on or turned off, so that the ice-melting processing may be performed on the three-phase wires and may be performed on the overhead ground wire or the optical fiber composite ground wire.

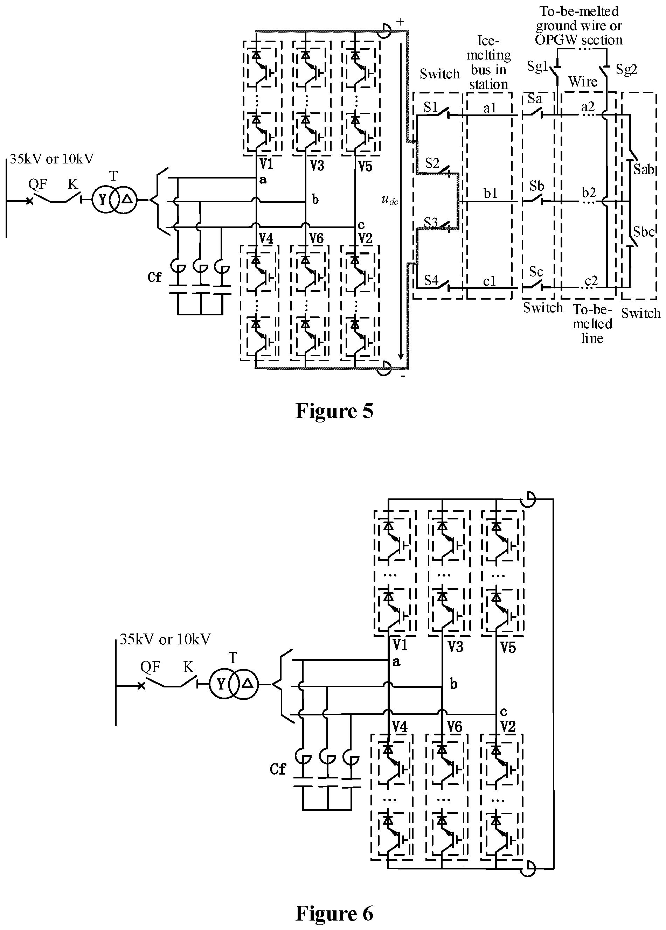

It should be further noted that the ice-melting apparatus is used for ice melting only in an icing period. In a case that the ice-melting apparatus may operate in a static synchronous compensation mode in a non-icing period, the utilization of the ice-melting apparatus may be significantly improved, and the reactive power regulation capability and the dynamic reactive power support capability of the substation at which the ice-melting apparatus is arranged may be improved, the availability of the ice-melting apparatus in the icing period may be ensured. As shown in Figure 5, according to the present disclosure, the second isolation switch S2 and the third isolation switch S3 are turned on and the other isolation switches are turned off in a case that it is unnecessary to perform the ice-melting processing on the lines with the ice-melting apparatus. Thus, the positive pole and the negative pole of u_{dc} are shorted, the three-phase six-bridge arm structure circuit is not connected to the three-phase ice-melting circuit, and a static synchronous compensation circuit is obtained. Figure 6 shows an equivalent circuit diagram of a static synchronous compensation circuit.

In the current source controllable direct-current current source ice-melting circuit according to the present disclosure, the three-phase six-bridge arm structure circuit includes current source converter valve groups each of which including reverse-resistance and fully-controlled power electronic devices connected in series, and the three-phase six-bridge arm structure circuit is connected to the three-phase ice-melting circuit. Switches are used for turning on or turning off a circuit, and an ice-melting circuit is formed, thereby performing ice-melting processing on three-phase wires (that is, transmission lines and ground lines). Different switches are controlled to form different circuit to perform ice-melting processing on different lines, so that the technical problem that the semi-controllable direct current ice melting apparatus with controllable rectification using thyristors, in operation, consumes reactive power and generates feature harmonics can be avoided. In addition, no capacitor is used in the three-phase six-bridge structure circuit, so that the technical problem that the direct current ice melting apparatus using a voltage source converter with a full-bridge submodule has a large volume and is easily limited in application scenarios can be avoided. Therefore, with the present disclosure, the technical problem that the direct current ice melting apparatus with controllable rectification using thyristors, in operation, consumes reactive power, generates feature harmonics and affects the connection to an alternating-current system and the technical problem that the direct current ice melting apparatus using a voltage source converter with a full-bridge submodule has a large volume and a low power density and is easily limited in application scenarios can be solved.

A current source controllable direct-current current source ice-melting apparatus is further provided according to an embodiment of the present disclosure. The apparatus includes the current source controllable direct-current current source ice-melting circuit described in the above embodiments. In the current source controllable direct-current current source ice-melting apparatus, the current source controllable direct-current current source ice-melting circuit described in the above embodiments is arranged, the technical effect same as the current source controllable direct-current current source ice-melting circuit can be achieved and operation principles are the same, which are not repeated herein.

In summary, the above embodiments are only for illustrating the technical solutions of the present disclosure, and are not intended to limit the present disclosure. Although the present disclosure is illustrated in detail with reference to the embodiments described above, it should be understood by those skilled in the art that modification can be made to the technical solutions recited in the embodiments described above, or equivalent substitution can be made to a part of technical features of the technical solution. The modifications and equivalent replacements will not make the corresponding technical solutions deviate from the scope of the technical solutions in the embodiments of the present disclosure.

## Claims

1. A current source controllable direct-current current source ice-melting circuit, comprising:
a three-phase six-bridge arm structure circuit;
a three-phase ice-melting circuit; and
a LC filtering circuit; wherein
the three-phase six-bridge structure circuit comprises following six bridge arms: a first current source converter valve group, a second current source converter valve group, a third current source converter valve group, a fourth current source converter valve group, a fifth current source converter valve group and a sixth current source converter valve group;
each of the first current source converter valve group, the second current source converter valve group, the third current source converter valve group, the fourth current source converter valve group, the fifth current source converter valve group and the sixth current source converter valve group comprises reverse-resistance and fully-controlled power electronic devices connected in series;
an input terminal of the three-phase six-bridge arm structure circuit is connected to an input phase of an alternating-current power supply and the LC filtering circuit, and an output terminal of the three-phase six-bridge arm structure circuit is connected to the three-phase ice-melting circuit through isolation switches;
the isolation switches comprise a first isolation switch, a second isolation switch, a third isolation switch and a fourth isolation switch;
a terminal of the first isolation switch is connected to a positive pole of an output terminal of the three-phase six-bridge arm structure circuit, and another terminal of the first isolation switch is connected to a first phase ice-melting circuit;
a terminal of the second isolation switch is connected to the positive pole of the output terminal of the three-phase six-bridge arm structure circuit, and another terminal of the second isolation switch is connected to a second phase ice-melting circuit;
a terminal of the third isolation switch is connected to a negative pole of the output terminal of the three-phase six-bridge arm structure circuit, and another terminal of the third isolation switch is connected to the second phase ice-melting circuit; and
a terminal of the fourth isolation switch is connected to the negative pole of the output terminal of the three-phase six-bridge arm structure circuit, and another terminal of the fourth isolation switch is connected to a third phase ice-melting circuit.

2. The current source controllable direct-current current source ice-melting circuit according to claim 1, wherein the reverse-resistance and fully-controlled power electronic devices are reverse-resistance IGBTs or IGBT series diodes.

3. The current source controllable direct-current current source ice-melting circuit according to claim 1, wherein the reverse-resistance and fully-controlled power electronic devices are reverse-resistance IGCTs or IGCT series diodes.

4. The current source controllable direct-current current source ice-melting circuit according to claim 1, wherein the input phase of the alternating-current power supply comprises a 35kV bus or a 10kV bus, a circuit breaker, a power supply-side isolation switch and a transformer that are connected in sequence.

5. The current source controllable direct-current current source ice-melting circuit according to claim 1, wherein
each of the first phase ice-melting circuit, the second phase ice-melting circuit and the third phase ice-melting circuit of the three-phase ice-melting circuit comprises a bus, an ice-melting isolation switch and a to-be-melted line that are connected in sequence; and
a terminal of a to-be-melted line in the first phase ice-melting circuit is connected to a terminal of a to-be-melted line in the second phase ice-melting circuit through a first circuit isolation switch, and the terminal of the to-be-melted line in the second phase ice-melting circuit is connected to a terminal of a to-be-melted line in the third phase ice-melting circuit through a second circuit isolation switch.

6. The current source controllable direct-current current source ice-melting circuit according to claim 5, wherein an input terminal of the to-be-melted line in the first phase ice-melting circuit is connected to an overhead ground wire or an optical fiber composite ground wire through a first branch isolation switch, and a terminal of the overhead ground wire or a terminal of the optical fiber composite ground wire is connected to an input terminal of the to-be-melted line in the third phase ice-melting circuit through a second branch isolation switch.

7. A current source controllable direct-current current source ice-melting apparatus, comprising the current source controllable direct-current current source ice-melting circuit according to any one of claims 1 to 6.
